# EUROPÄISCHE PATENTSCHRIFT

(11) **EP 4 234 642 B1**
(45) Veröffentlichungstag und Bekanntmachung des Hinweises auf die Patenterteilung: **15.04.2026**
(21) Anmeldenummer: 22159228.0
(22) Anmeldetag: 28.02.2022
(51) Int. Cl.: C09D 5/00

(54) **WÄSSRIGE STRUKTURLACKBESCHICHTUNGSMASSE, LACKBESCHICHTUNG AUS DER WÄSSRIGEN STRUKTURLACKBESCHICHTUNGSMASSE, METALLSUBSTRAT UMFASSEND DIE LACKBESCHICHTUNG, VERWENDUNG DER WÄSSRIGEN STRUKTURLACKBESCHICHTUNGSMASSE UND VERFAHREN ZUR BESCHICHTUNG EINES METALLSUBSTRATS MIT DER WÄSSRIGEN STRUKTURLACKBESCHICHTUNGSMASSE**
AQUEOUS TEXTURED PAINT COATING COMPOSITION, PAINT COATING FROM THE AQUEOUS TEXTURED PAINT COATING COMPOSITION, METAL SUBSTRATE COMPRISING THE PAINT COATING, USE OF THE AQUEOUS TEXTURED PAINT COATING COMPOSITION AND METHOD FOR COATING A METAL SUBSTRATE WITH THE AQUEOUS TEXTURED PAINT COATING COMPOSITION
MATIÈRE AQUEUSE DE REVÊTEMENT STRUCTURAL DE PEINTURE, REVÊTEMENT DE PEINTURE À PARTIR DE LA MATIÈRE AQUEUSE DE REVÊTEMENT STRUCTURAL DE PEINTURE, SUBSTRAT MÉTALLIQUE COMPORTANT LE REVÊTEMENT DE PEINTURE, UTILISATION DE LA MATIÈRE AQUEUSE DE REVÊTEMENT STRUCTURAL DE PEINTURE ET PROCÉDÉ DE REVÊTEMENT D'UN SUBSTRAT MÉTALLIQUE DE LA MATIÈRE AQUEUSE DE REVÊTEMENT STRUCTURAL DE PEINTURE

(43) Veröffentlichungstag der Anmeldung: 30.08.2023
(73) Patentinhaber: DAW SE, 64372 Ober-Ramstadt (DE)
(72) Erfinder: KREISEL, Laura, 64846 Groß-Zimmern (DE); OVERMEYER Sonja, 63322 Rödermark (DE); OTTENS, Stephan, 64372 Ober-Ramstadt (DE)
(74) Vertreter: Michalski Hüttermann & Partner Patentanwälte mbB

(56) Entgegenhaltungen:
- GB-A- 927 517
- US-A1- 2006 037 624

## Beschreibung

Die vorliegende Erfindung betrifft eine wässrige Strukturlackbeschichtungsmasse, eine Lackbeschichtung aus der erfindungsgemäßen wässrigen Strukturlackbeschichtungsmasse und ein Metallsubstrat umfassend die erfindungsgemäße Lackbeschichtung. Ferner betrifft die Erfindung die Verwendung der erfindungsgemäßen wässrigen Strukturlackbeschichtungsmasse sowie ein Verfahren zur Beschichtung eines Metallsubstrats mit der erfindungsgemäßen wässrigen Strukturlackbeschichtungsmasse.

Lacke mit Hammerschlageffekt sind aus dem Stand der Technik bereits bekannt. Als Basis für lösemittelhaltige Hammerschlaglacke greift man häufig auf Naturharze, Phenolharze, Alkydharze, Epoxyharze, Aminoplaste, Vinylharze, Chlorkautschuke und Celluloseester zurück. Geeignete Lösemittel stellen dabei Toluol, Xylol, Isopropanol, Ethylglykol und Ethylacetat dar.

Gemäß der AT 278992 erhält man einen streichbaren Hammerschlaglack, wenn man 70 bis 77 Volumenteile einer 60%-igen Lösung eines ölmodifizierten, mit Vinyltoluol copolymerisierten Phthalatharzes in Testbenzin gemeinsam mit etwa 5 Volumenteilen einer mit Testbenzin angeteigten Aluminiumpigmentpaste, 0,5 bis 3,5 Volumenteilen Silikonöl und 18 bis 26 Volumenteilen eines Ethanol enthaltenden Verdünnungsmittels verwendet.

Die DE 1 242 307 betrifft die Verwendung von Siliconölen mit einer Viskosität von 300 bis 300 000 cSt (bei 20° C) und/oder Siliconfetten zusammen mit organischen Lösungsmitteln, die das Bindemittel anlösen, als Effektgeber für auf der Grundlage von wässrigen Polymerisatdispersionen aufgebauten Anstrichmitteln zur Herstellung von Überzügen mit Hammerschlag-, Apfelsinenschalen-, Plastik- oder Zweifarbeneffekt. In der DE 1 242 307 wird als Bindemittel auf Ammoniumsalze von Vinylacetat/Crotonsäure-Copolymeren zurückgegriffen.

Die DE 16 69 137 stellt ab auf Hammerschlageffektlacke mit thixotropen Eigenschaften, welche auch bei Anwesenheit von stark polaren Lösungsmitteln erhalten bleiben, auf Basis von ofen- und lufttrocknenden bzw. säurehärtenden Alkydharzen, gekennzeichnet durch 1 bis 30 Gewichtsprozent an Polyurethanen aus Diisocyanaten mit zu allen NCO-Gruppen nachbarständigen Alkylgruppen und Diolen.

Die US 2006/037624 A1 betrifft ein Make-up-Set für Nägel, bestehend aus i) mindestens einer ersten flüssigen Zusammensetzung, umfassend z.B. mindestens ein Klebematerial und eine organische Lösungsmittelphase, und ii) mindestens einem flexiblen Polymerfilm, wobei der mindestens eine Film und die mindestens eine erste flüssige Zusammensetzung so beschaffen sind, dass der Film am Nagel haftet, wenn er auf den mit der mindestens einen ersten flüssigen Zusammensetzung beschichteten Nagel aufgetragen wird. Hiebei kann der mindestens eine Polymerfilm mittels Vernetzung einer vernetzbaren Zusammensetzung oder mittels Verdampfung der Lösungsmittelphase einer Lösung oder Dispersion mindestens eines filmbildenden Polymers gebildet werden. Das mindestens eine Klebematerial der ersten flüssigen Zusammensetzung kann ausgewählt werden aus Copolymeren, die aus der Copolymerisation von Vinylmonomeren mit polymeren Einheiten stammen, Copolymeren, die ein polymeres Rückgrat und eine Tg im Bereich von 0°C bis 45°C aufweisen und mit Ketten gepfropft sind, die aus Acryl- und/oder Methacrylmonomeren stammen und eine Tg im Bereich von 50°C bis 200°C aufweisen, und Polyisobutylenen mit einer relativen Molmasse Mv im Bereich von 10.000 bis 150.000.

Die aus dem Stand der Technik bekannten Hammerschlageffektlacke werden regelmäßig allein für dekorative Zwecke eingesetzt. Sie lassen gleichwohl noch Wünsche offen.

Daher lag der vorliegenden Erfindung die Aufgabe zugrunde, das Einsatzspektrum von Hammerschlageffektlacken zu erweitern. Insbesondere lag der Erfindung die Aufgabe zugrunde, wässrige Hammerschlageffektlacke als Korrosionsschutz für Metallsubstrate verfügbar zu machen.

Demgemäß wurde eine wässrige Strukturlackbeschichtungsmasse, insbesondere Hammerschlaglackbeschichtungsmasse, gefunden, umfassend
- mindestens ein organisches Bindemittel, basierend auf einer Vinylester/Acrylat-Copolymer-Dispersion, insbesondere Versaticsäurevinylester/Acrylat-Dispersion,
   und/oder einer Vinylaromat/Acrylat-Copolymer-Dispersion, insbesondere Styrol/Acrylat-Dispersion,
- mindestens ein Korrosionsschutzpigment, umfassend Strontiumaluminiumpolyphosphathydrat, Antimonzinnoxid, Zinkmolybdat, Aluminiumpolyphosphat, Calciumstrontiumphosphosilicat, basisches Zinkmolybdänorthophosphathydrat und/oder Zink-5-nitroisophthalat,
- mindestens einen Füllstoff, insbesondere enthaltend oder bestehend aus, bevorzugt bestehend aus, besonders bevorzugt enthaltend, Bariumsulfat,
- mindestens ein Polysiloxan und
- plättchenförmige Metallflakes, umfassend oder bestehend aus anorganisch beschichteten Aluminiumflakes.

Bei der erfindungsgemäßen Strukturlackbeschichtungsmasse handelt sich bevorzugt um eine Hammerschlaglackbeschichtungsmasse, auch kurz Hammerschlaglack genannt. Unter einem Hammerschlaglack wird regelmäßig ein Effektlack verstanden, bei dem unverträgliche Silikonöle ein Bindemittel an der Ausbildung eines zusammenhängenden Filmes auf einem Substrat hindern und bei dem aufgrund von lokal verminderter Oberflächenspannung Krater entstehen. Indem sich um diese Krater herum Glimmerpartikel oder Aluminiumteilchen ringförmig anordnen, entsteht das optische Erscheinungsbild einer Oberfläche, die einer mit einem Hammer bearbeiteten Metalloberfläche ähnlich ist. Mit den erfindungsgemäßen wässrigen Strukturlackbeschichtungsmassen gelingt überraschend schon bei einmaligem Auftrag auf ein Metallsubstrat ein Korrosionsschutz, bevorzugt bei zweimaligem Auftrag und insbesondere bei dreimaligem Auftrag.

In den erfindungsgemäßen wässrigen Strukturlackbeschichtungsmassen liegt der Gehalt an Wasser regelmäßig im Bereich von 20 bis 50 Gew.-% und insbesondere im Bereich von 30 bis 40 Gew.-%, bezogen auf das Gesamtgewicht der Strukturlackbeschichtungsmasse.

Für die erfindungsgemäßen Strukturlackbeschichtungsmassen kommen als besonders geeignete Korrosionsschutzpigmente Calciumstrontiumphosphosilicat, basisches Zinkmolybdänorthophosphathydrat und/oder Zink-5-nitroisophthalat zum Einsatz, wobei Calciumstrontiumphosphosilicat besonders bevorzugt ist. In den erfindungsgemäßen Strukturlackbeschichtungsmassen liegt der Gehalt an Korrosionsschutzpigment, insbesondere Calciumstrontiumphosphosilicat, im Bereich von 0,5 bis 10 Gew.-%, insbesondere im Bereich von 1,5 bis 5 Gew.-%, bezogen auf das Gesamtgewicht der Strukturlackbeschichtungsmasse.

Ferner können die erfindungsgemäßen Strukturlackbeschichtungsmassen mindestens einen Korrosionsschutzinhibitor, vorzugsweise einen organischen Korrosionsschutzinhibitor, enthalten, insbesondere ausgewählt aus der Gruppe bestehend aus Dicyclohexylammoniumnitrit, Cyclohexylammoniumcyclohexylcarbamat, Diisopropylammoniumnitrit, Cyclohexylamincarbonat, Guanidinnitrat, Harnstoff, Monoethanolamin, Citronensäure, Natriumbenzoat und beliebigen Mischungen hiervon. Ganz besonders bevorzugt wird als Korrosionsschutzinhibitor auf Natriumbenzoat zurückgegriffen. In den erfindungsgemäßen Strukturlackbeschichtungsmassen liegt der Gehalt an Korrosionsschutzinhibitor, insbesondere an Natriumbenzoat, im Bereich von 0,01 bis 1,0 Gew.-%, bevorzugt im Bereich von 0,05 bis 0,5 Gew.-% und besonders bevorzugt im Bereich von 0,08 bis 0,3 Gew.-%, bezogen auf das Gesamtgewicht der Strukturlackbeschichtungsmasse.

Die erfindungsgemäßen wässrigen Strukturlackbeschichtungsmassen ermöglichen einen Zugang zu Beschichtungsmassen, die im Wesentlichen nitritfrei und/oder boratfrei sowie insbesondere nitritfrei und/oder boratfrei sind. Besonders bevorzugt sind solche erfindungsgemäßen wässrigen Strukturlackbeschichtungsmassen, die im Wesentlichen nitritfrei und boratfrei sowie insbesondere nitritfrei und boratfrei sind. Unter im Wesentlichen nitritrei im Sinne der vorliegenden Erfindung sollen derartige erfindungsgemäße wässrige Strukturlackbeschichtungsmassen verstanden werden, in denen weniger als 0,1 Gewichtsprozent an Nitriten vorliegen. In Mengen kleiner als 0,1 Gewichtsprozent tragen Nitrite regelmäßig nicht mehr nachweislich zum Korrosionsschutz bei. Unter im Wesentlichen boratrei im Sinne der vorliegenden Erfindung sollen derartige erfindungsgemäße wässrige Strukturlackbeschichtungsmassen verstanden werden, in denen weniger als 0,1 Gewichtsprozent an Boraten vorliegen. In Mengen kleiner als 0,1 Gewichtsprozent tragen Borate regelmäßig nicht mehr nachweislich zum Korrosionsschutz bei. Und unter im Wesentlichen nitritrei und boratfrei im Sinne der vorliegenden Erfindung sollen derartige erfindungsgemäße wässrige Strukturlackbeschichtungsmassen verstanden werden, in denen in der Summe weniger als 0,2 Gewichtsprozent an Nitriten und Boraten vorliegen. In der kummulierten Mengen kleiner als 0,2 Gewichtsprozent tragen Nitrite und Borate regelmäßig nicht mehr nachweislich zum Korrosionsschutz bei.

Ferner zeichnen sich die erfindungsgemäßen Beschichtungsmassen vorteilhafter Weise dadurch aus, dass sie über einen VOC-Wert von maximal 130 g/L, bevorzugt von maximal 100 g/L, besonders bevorzugt von maximal 70 g/L, ferner bevorzugt von maximal 50 g/L und insbesondere von maximal 40 g/L verfügen, jeweils bestimmt gemäß DIN EN ISO 11890-1 (in der Fassung von September 2007).

Als organische Bindemittel sind erfindungsgemäß solche zu verwenden, die auf einer Vinylester/Acrylat-Copolymer-Dispersion und/oder einer Vinylaromat/Acrylat-Copolymer-Dispersion basieren. Unter den Vinylester/Acrylat-Copolymer-Dispersionen sind Versaticsäurevinylester/Acrylat-Dispersionen und unter den Vinylaromat/Acrylat-Copolymer-Dispersionen Styrol/Acrylat-Dispersionen bevorzugt. In den erfindungsgemäßen Strukturlackbeschichtungsmassen liegt der Gehalt an organischem Bindemittel (Feststoffanteil), insbesondere basierend auf einer Styrol/Acrylat-Dispersion, regelmäßig im Bereich von 10 bis 40 Gew.-%, insbesondere im Bereich von 20 bis 35 Gew.-%, bezogen auf das Gesamtgewicht der Strukturlackbeschichtungsmasse.

In den erfindungsgemäßen wässrigen Strukturlackbeschichtungsmassen kommen als Füllstoffe insbesondere solche, ausgewählt aus der Gruppe bestehend aus Schichtsilikaten, insbesondere Glimmer wie beschichteter Glimmer, Magnesiumsilikaten, Aluminiumsilikaten, Bariumsulfat und beliebigen Mischungen hiervon, zum Einsatz. Ganz besonders bevorzugt wird auf Schichtsilikate und/oder Bariumsulfat zurückgegriffen, wobei Bariumsulfat nochmals bevorzugt ist. Grundsätzlich kann auf natürliches wie auch auf synthetisches Bariumsulfat zurückgegriffen werden, wobei synthetisches Bariumsulfat jedoch bevorzugt ist. Daneben können alternativ oder zusätzlich als Füllstoffe grundsätzlich auch weitere silikatische und/oder calcitische Füllstoffe verwendet werden.

Derartige erfindungsgemäße wässrige Strukturlackbeschichtungsmassen haben sich als besonders zweckmäßig für die Lösung der der Erfindung zugrunde liegenden Aufgabe erwiesen, bei denen der mindestens eine Füllstoff, insbesondere Bariumsulfat, über einen D10-Wert kleiner oder gleich 10 µm, bevorzugt kleiner oder gleich 1,0 µm und besonders bevorzugt kleiner 1,0 µm, verfügt. Alternativ sowie insbesondere zusätzlich kann vorgesehen sein, dass der mindestens eine Füllstoff, insbesondere Bariumsulfat, über einen D50-Wert im Bereich von 1,0 bis 30 µm, bevorzugt im Bereich von größer 1,0 bis 5,0 µm verfügt. Ferner kann alternativ sowie insbesondere zusätzlich vorgesehen sein, dass der mindestens eine Füllstoff, insbesondere Bariumsulfat, über einen D90-Wert im Bereich von 5,0 bis 50 µm, bevorzugt im Bereich von größer 5,0 bis 15 µm verfügt. Hierbei sind die D10-, D50- und D90-Werte der Füllstoffe gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) zu ermitteln.

In den erfindungsgemäßen Strukturlackbeschichtungsmassen liegt der Gehalt an Füllstoffen, insbesondere Bariumsulfat, im Bereich von 10 bis 40 Gew.-%, insbesondere im Bereich von 15 bis 30 Gew.-%, bezogen auf das Gesamtgewicht der Strukturlackbeschichtungsmasse.

Derartige erfindungsgemäße Strukturlackbeschichtungsmassen lösen die der Erfindung zugrunde liegende Aufgabe besonders gut, die gekennzeichnet sind durch
einen Gehalt an Wasser im Bereich von 20 bis 50 Gew.-%, insbesondere im Bereich von 30 bis 40 Gew.-%, und/oder, insbesondere und,
einen Gehalt an Bindemittel (Feststoffanteil), insbesondere basierend auf einer Styrol/Acrylat-Dispersion, im Bereich von 10 bis 40 Gew.-%, insbesondere im Bereich von 20 bis 35 Gew.-%, und/oder, insbesondere und,
einen Gehalt an Korrosionsschutzpigment, insbesondere umfassend oder bestehend aus Calciumstrontiumphosphosilicat, im Bereich von 0,5 bis 10 Gew.-%, insbesondere im Bereich von 1,5 bis 5 Gew.-%, und/oder, insbesondere und,
einen Gehalt an Füllstoff, insbesondere Bariumsulfat, im Bereich von 10 bis 40 Gew.-%, insbesondere im Bereich von 15 bis 30 Gew.-%, und/oder, insbesondere und,
einen Gehalt an Polysiloxan, insbesondere Poly(dimethylsiloxane), im Bereich von 0,05 bis 1,5 Gew.-%, insbesondere im Bereich von 0,1 bis 1,0 Gew.-%, und/oder, insbesondere und,
einen Gehalt an Metallflakes, insbesondere Aluminiumflakes, im Bereich von 0,1 bis 5,0 Gew.-%, insbesondere im Bereich von 0,25 bis 3,0 Gew.-%,
jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren.

Hierbei sind solche erfindungsgemäßen Strukturlackbeschichtungsmassen besonders bevorzugt, die gekennzeichnet sind durch
einen Gehalt an Wasser im Bereich von 20 bis 50 Gew.-%, insbesondere im Bereich von 30 bis 40 Gew.-%, und/oder, insbesondere und,
einen Gehalt an Bindemittel (Feststoffanteil), insbesondere basierend auf einer Styrol/Acrylat-Dispersion, im Bereich von 10 bis 40 Gew.-%, insbesondere im Bereich von 20 bis 35 Gew.-%, und/oder, insbesondere und,
einen Gehalt an Korrosionsschutzpigment, insbesondere umfassend oder bestehend aus Calciumstrontiumphosphosilicat, im Bereich von 0,5 bis 10 Gew.-%, insbesondere im Bereich von 1,5 bis 5 Gew.-%, und/oder, insbesondere und,
einen Gehalt an Füllstoff, insbesondere Bariumsulfat, im Bereich von 10 bis 40 Gew.-%, insbesondere im Bereich von 15 bis 30 Gew.-%, und/oder, insbesondere und,
einen Gehalt an Polysiloxan, insbesondere Poly(dimethylsiloxane), im Bereich von 0,05 bis 1,5 Gew.-%, insbesondere im Bereich von 0,1 bis 1,0 Gew.-%, und/oder, insbesondere und,
einen Gehalt an Metallflakes, insbesondere Aluminiumflakes, im Bereich von 0,1 bis 5,0 Gew.-%, insbesondere im Bereich von 0,25 bis 3,0 Gew.-%, und/oder, insbesondere und,
einen Gehalt an Korrosionsschutzinhibitor, insbesondere an Natriumbenzoat, im Bereich von 0,01 bis 1,0 Gew.-%, bevorzugt im Bereich von 0,05 bis 0,5 Gew.-% und besonders bevorzugt im Bereich von 0,08 bis 0,3 Gew.-%,
jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren.

Besonders geeignet sind dabei insbesondere auch derartige erfindungsgemäße Strukturlackbeschichtungsmassen, die gekennzeichnet sind durch
einen Gehalt an Wasser im Bereich von 20 bis 50 Gew.-%, insbesondere im Bereich von 30 bis 40 Gew.-%, und
einen Gehalt an Bindemittel (Feststoffanteil), insbesondere basierend auf einer Styrol/Acrylat-Dispersion, im Bereich von 20 bis 35 Gew.-% und
einen Gehalt an Calciumstrontiumphosphosilicat als Korrosionsschutzpigment im Bereich von 1,5 bis 5 Gew.-% und
einen Gehalt an Füllstoff, insbesondere Bariumsulfat, im Bereich von 15 bis 30 Gew.-% und
einen Gehalt an Poly(dimethylsiloxane) im Bereich von 0,1 bis 1,0 Gew.-% und
einen Gehalt an Aluminiumflakes im Bereich von 0,25 bis 3,0 Gew.-% und
einen Gehalt an Natriumbenzoat als Korrosionsschutzinhibitor im Bereich von 0,05 bis 0,5 Gew.-%,
jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren,
oder die gekennzeichnet sind durch
einen Gehalt an Wasser im Bereich von 30 bis 40 Gew.-% und
einen Gehalt an Bindemittel (Feststoffanteil)basierend auf einer Styrol/Acrylat-Dispersion im Bereich von 20 bis 35 Gew.-% und
einen Gehalt an Calciumstrontiumphosphosilicat als Korrosionsschutzpigment im Bereich von 1,5 bis 5 Gew.-% und
einen Gehalt an Bariumsulfat als Füllstoff im Bereich von 15 bis 30 Gew.-% und
einen Gehalt an Poly(dimethylsiloxane) im Bereich von 0,1 bis 1,0 Gew.-% und
einen Gehalt an Aluminiumflakes im Bereich von 0,25 bis 3,0 Gew.-% und
einen Gehalt an Natriumbenzoat als Korrosionsschutzinhibitor im Bereich von 0,05 bis 0,5 Gew.-%,
jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren.

In den erfindungsgemäßen Strukturlackbeschichtungsmassen liegen die Metallflakes bevorzugt in Form von silikatbeschichteten Aluminiumflakes vor, wobei diese Aluminiumflakes besonders geeignet sind, um die der Erfindung zugrunde liegenden Aufgabe zu lösen. In diesem Zusammenhang haben sich derartige erfindungsgemäße wässrige Strukturlackbeschichtungsmassen als besonders geeignet zur Lösung der der Erfindung zugrunde liegenden Aufgabe erwiesen, bei denen die Metallflakes, insbesondere die silikatbeschichteten Aluminiumflakes, einen D10-Wert im Bereich von 1,0 bis 20 µm, bevorzugt im Bereich von 1,0 bis 10 µm aufweisen. Alternativ sowie insbesondere zusätzlich kann vorgesehen sein, dass die Metallflakes, insbesondere die silikatbeschichteten Aluminiumflakes, einen D50-Wert im Bereich von 5,0 bis 40 µm, bevorzugt im Bereich von 10 bis 30 µm, aufweisen. Ferner kann alternativ sowie insbesondere zusätzlich vorgesehen sein, dass die Metallflakes, insbesondere die silikatbeschichteten Aluminiumflakes, einen D90-Wert im Bereich von 15 bis 60 µm, bevorzugt im Bereich von 25 bis 50 µm, aufweisen. Hierbei können die D10-, D50- und D90-Werte der Metallflakes, insbesondere der Aluminiumflakes, mittels Laserbeugungsverfahren in Anlehnung an die ISO 13320:2020-01 (Partikelgrößenanalyse - Partikelmessung durch Laserlichtbeugung) ermittelt werden, z.B. mit einem Messgerät der Firma Malvern Panalytical GmbH wie dem Mastersizer 3000. Die Metallflakes sind plättchenförmig und weisen bevorzugt eine Dicke im Bereich von 50 bis 500 nm und insbesondere 100 bis 300 nm, auf (gemessen mittels Rasterelektronenmikroskop). Durch die beiden vorangehend genannten Analysemethoden gelingt eine hinreichende Bestimmung der geometrischen Parameter der Metallflakes

Teilchen, wobei die Messung der D10-, D50- und D90-Teilchengrößen eher den Durchmesser der Plättchen widerspiegelt.

In den erfindungsgemäßen Strukturlackbeschichtungsmassen liegt der Gehalt an Metallflakes, insbesondere Aluminiumflakes, im Bereich von 0,1 bis 5,0 Gew.-%, insbesondere im Bereich von 0,25 bis 3,0 Gew.-%, bezogen auf das Gesamtgewicht der Strukturlackbeschichtungsmasse.

Bei den in den erfindungsgemäßen wässrigen Strukturlackbeschichtungsmassen zum Einsatz kommenden Polysiloxanen handelt es sich bevorzugt um Poly(dialkylsiloxane), wobei Poly(dimethylsiloxane) besonders bevorzugt sind. In den erfindungsgemäßen Strukturlackbeschichtungsmassen liegt der Gehalt an Polysiloxanen, insbesondere Poly(dimethylsiloxane), im Bereich von 0,05 bis 1,5 Gew.-%, insbesondere im Bereich von 0,1 bis 1,0 Gew.-%, bezogen auf das Gesamtgewicht der Strukturlackbeschichtungsmasse.

Schließlich können die erfindungsgemäßen Strukturlackbeschichtungsmassen auch Dispergiermittel, Entschäumer, modifizierte Schichtsilikate, Rheologieadditive, insbesondere Verdicker und/oder Thixotropieadditive, Lösemittel und/oder Pigmente enthalten.

Besonders bevorzugt sind auch solche erfindungsgemäßen Strukturlackbeschichtungsmassen enthaltend 20 bis 50 Gew.-%, insbesondere 30 bis 40 Gew.-%, Wasser, 10 bis 40 Gew.- %, insbesondere 20 bis 35 Gew.-%, Styrol/Acrylat-Dispersion (Feststoffanteil), 0,5 bis 10 Gew.-%, insbesondere 1,5 bis 5 Gew.-%, Natriumbenzoat und/oder, insbesondere und, Calciumstrontiumphosphosilicat, 10 bis 40 Gew.-%, insbesondere 15 bis 30 Gew.-%, Bariumsulfat, 0,05 bis 1,5 Gew.-%, insbesondere 0,1 bis 0,75 Gew.-%, Poly(dimethylsiloxane) und 0,1 bis 5,0 Gew.-%, insbesondere 0,25 bis 3,0 Gew.-%, Aluminiumflakes, jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren.

Die der Erfindung zugrunde liegende Aufgabe wird des Weiteren gelöst durch eine Lackbeschichtung, erhalten durch ein- oder mehrmaliges Auftragen der erfindungsgemäßen wässrigen Strukturlackbeschichtungsmasse auf einer Oberfläche eines Substrats. Diese Lackbeschichtung umfasst bevorzugt mindestens zwei, insbesondere drei, Beschichtungsaufträge der wässrigen Strukturlackbeschichtungsmasse. Es hat sich hierbei als zweckmäßig erwiesen, vor Auftrag einer nachfolgenden Lackbeschichtung auf die vorherige Lackbeschichtung letztere zuvor einem Trocknungsvorgang zu unterziehen.

Für viele Anwendungen hat es sich als sehr zweckmäßig erwiesen, die Menge an derart zu wählen, dass bei dreimaligem Auftrag eine Trockenschichtdicke im Bereich von 80 bis 170 µm, bevorzugt von 90 bis 150 µm und besonders bevorzugt von 100 bis 130 µm, erhalten wird. Die Trockenschichtdicke wird dabei gemäß der ISO 2808:2019-12 (Beschichtungsstoffe - Bestimmung der Schichtdicke), Ziffer 5.8, mittels Ultraschall-Technologie mit dem Schichtdickenmessgerät PosiTector 200 der Firma DeFelsko Corp. ermittelt. Zur Probenvorbereitung wird der auf einem Blech vorliegende Beschichtungsaufbau, z.B. das 3-Schichtsystem, 7 Tage bei 23°C und 50% relative Luftfeuchtigkeit getrocknet. Danach wird auf einem nicht-beschichteten Blech die Nullpunktbestimmung durchgeführt. Zur Schichtdickenmessung wird dann an mindestens 3 Punkten auf der Beschichtung, wie vorangehend ausgeführt, gemessen und der Mittelwert gebildet.

Bei dem zu beschichtenden Substrat handelt sich bevorzugt um ein Metallsubstrat. Besonders geeignete Substrate umfassen hierbei Eisen-, Stahl- oder Zinksubstrate.

Ferner wird die der Erfindung zugrunde liegende Aufgabe gelöst durch ein beschichtetes Metallsubstrat, enthaltend die erfindungsgemäße Lackbeschichtung. Ganz besonders bevorzugt stellt das Metallsubstrat ein Stahlblechsubstrat dar.

Es hat sich überraschend gezeigt, dass mit den erfindungsgemäßen beschichteten Metallsubstraten die Klassifizierung Rostgrad Ri ≤1 gemäß dem TÜV Rheinland PROOF Kriterienkatalog für Beschichtungssysteme zum Korrosionsschutz für Metalle - 2 PfG S 0004, Stand 08/2016, nach 500 h Belastung unter den Bedingungen des Salzsprühnebeltests nach DIN EN ISO 9227-NSS:2019, erhalten wird. Für diesen Test werden Stahlbleche des Typs DCo4 verwendet. Diese sind vor dem Auftrag mit der erfindungsgemäßen wässrigen Strukturlackbeschichtungsmasse mit 120er Schleifpapier trocken zu schleifen und anschließend zu entstauben sowie mit Isopropanol zu entfetten. Der Auftrag mit der erfindungsgemäßen wässrigen Strukturlackbeschichtungsmasse hat nach 14 Tagen Lagerung bei Raumklima zu erfolgen. Die erfindungsgemäßen beschichteten Metallsubstrate zeichnen sich demgemäß durch einen sehr ausgeprägten Korrosionsschutz aus.

Die erfindungsgemäßen wässrigen Strukturlackbeschichtungsmassen können als Eintopf-Beschichtungszusammensetzungen verwendet werden. Auch lassen sich mit diesen Strukturlackbeschichtungsmassen Metallschutzlackbeschichtungen mit Hammerschlageffekt herstellen. Sie eignen sich zudem als Korrosionsschutz für Metallsubstrate sowie selbst zur Beschichtung rostiger Oberflächen.

Erfindungsgemäße beschichtete Metallsubstrate lassen sich insbesondere auch dadurch erhalten, dass man die erfindungsgemäßen wässrigen Strukturlackbeschichtungsmassen mittels Roll-, Streich- oder mittels Spritzverfahren auf die Substratoberfläche aufträgt.

Mit der erfindungsgemäßen Strukturlackbeschichtungsmasse gelingt ein Zugang zu wässrigen Metallschutzlacken, die Beschichtungen mit Hammerschlageffekt für Metallsubstrate liefern und dabei zugleich einen hohen Korrosionsschutz gewährleisten. Dies ist überraschend, weisen doch Beschichtungen mit Hammerschlageffekt gezielt Störungen der Oberfläche auf. Mit den erfindungsgemäßen wässrigen Strukturlackbeschichtungsmassen werden überdies Systeme zur Verfügung gestellt, die ein vergleichbares Anwendungs- und Eigenschaftsprofil ermöglichen wie lösemittelbasierte Metallschutzlacke. Überraschend hat sich auch gezeigt, dass die erfindungsgemäßen wässrigen Strukturlackbeschichtungsmassen schnelltrocknend sind und bereits nach etwa drei Stunden bei 23°C und einer relativen Luftfeuchte von 50% überlackiert werden können. Von ganz besonderem Vorteil ist auch, dass sich mit den erfindungsgemäßen wässrigen Strukturlackbeschichtungsmassen selbst Zinksubstrate einwandfrei beschichten und auf diese Weise mit einem Korrosionsschutz ausstatten lassen.

## Patentansprüche

1. Wässrige Strukturlackbeschichtungsmasse, insbesondere Hammerschlaglackbeschichtungsmasse, umfassend
- mindestens ein organisches Bindemittel, basierend auf einer Vinylester/Acrylat-Copolymer-Dispersion, insbesondere Versaticsäurevinylester /Acrylat-Dispersion, und/oder einer Vinylaromat/Acrylat-Copolymer-Dispersion, insbesondere Styrol/Acrylat-Dispersion,
- mindestens ein Korrosionsschutzpigment, umfassend Strontiumaluminiumpolyphosphathydrat, Antimonzinnoxid, Zinkmolybdat, Aluminiumpolyphosphat Calciumstrontiumphosphosilicat, basisches Zinkmolybdänorthophosphathydrat und/oder Zink-5-nitroisophthalat,
- mindestens einen Füllstoff, insbesondere enthaltend Bariumsulfat,
- mindestens ein Polysiloxan, insbesondere Polysiloxanöl, und
- plättchenförmige Metallflakes, umfassend oder bestehend aus anorganisch beschichteten Aluminiumflakes.

2. Strukturlackbeschichtungsmasse nach Anspruch 1, **dadurch gekennzeichnet, dass** das mindestens eine Korrosionsschutzpigment basisches Calciumstrontiumphosphosilicat, Zinkmolybdänorthophosphathydrat und/oder Zink-5-nitroisophthalat umfasst.

3. Strukturlackbeschichtungsmasse nach Anspruch 1 oder 2, **dadurch gekennzeichnet, dass**
diese im Wesentlichen nitritfrei und/oder boratfrei, bevorzugt im Wesentlichen nitritfrei und boratfrei und besonders bevorzugt nitritfrei und/oder boratfrei, ist, und/oder, insbesondere und, dass
diese über einen VOC-Wert von maximal 130 g/L, bevorzugt von maximal 100 g/L und besonders bevorzugt von maximal 70 g/L verfügt, jeweils bestimmt gemäß DIN EN ISO 11890-1 (September 2007).

4. Strukturlackbeschichtungsmasse nach einem der vorangehenden Ansprüche,
**dadurch gekennzeichnet, dass**
der mindestens eine Füllstoff ausgewählt ist aus der Gruppe bestehend aus Schichtsilikaten, insbesondere Glimmer wie beschichteter Glimmer, Magnesiumsilikaten, Aluminiumsilikaten, Bariumsulfat und beliebigen Mischungen hiervon, und insbesondere Schichtsilikate und/oder Bariumsulfat umfasst

5. Strukturlackbeschichtungsmasse nach einem der vorangehenden Ansprüche,
**dadurch gekennzeichnet, dass**
der mindestens eine Füllstoff, insbesondere Bariumsulfat, über einen D10-Wert kleiner oder gleich 10 µm, bevorzugt kleiner oder gleich 1,0 µm und besonders bevorzugt kleiner 1,0 µm, verfügt und/oder über einen D50-Wert im Bereich von 1,0 bis 30 µm, bevorzugt im Bereich von größer 1,0 bis 5,0 µm, besonders bevorzugt im Bereich von 2,0 bis 4,5 µm, verfügt und/oder über einen D90-Wert im Bereich von 5,0 bis 50 µm, bevorzugt im Bereich von größer 5,0 bis 15 µm verfügt.

6. Strukturlackbeschichtungsmasse nach einem der vorangehenden Ansprüche, ferner umfassend
Dispergiermittel, Entschäumer, modifizierte Schichtsilikate, Rheologieadditive, insbesondere Verdicker und/oder Thixotropieadditive, Lösemittel und/oder Pigmente.

7. Strukturlackbeschichtungsmasse nach einem der vorangehenden Ansprüche,
**dadurch gekennzeichnet, dass**
die Metallflakes silikatbeschichtete Aluminiumflakes umfassen oder hieraus bestehen.

8. Strukturlackbeschichtungsmasse nach einem der vorangehenden Ansprüche,
**dadurch gekennzeichnet, dass**
die Metallflakes, insbesondere die silikatbeschichteten Aluminiumflakes, einen D10-Wert im Bereich von 1,0 bis 20 µm, bevorzugt im Bereich von 2,0 bis 10 µm, besonders bevorzugt im Bereich von 4,0 bis 9,0 µm, und/oder, insbesondere und, einen D50-Wert im Bereich von 5,0 bis 40 µm, bevorzugt im Bereich von 10 bis 30 µm, besonders bevorzugt im Bereich von 14 bis 22 µm, und/oder, insbesondere und, einen D90-Wert im Bereich von 15 bis 60 µm, bevorzugt im Bereich von 25 bis 50 µm, bevorzugt im Bereich von 35 bis 45 µm, aufweisen.

9. Strukturlackbeschichtungsmasse nach einem der vorangehenden Ansprüche,
**dadurch gekennzeichnet, dass**
die Polysiloxane Poly(dialkylsiloxane), insbesondere Poly(dimethylsiloxane), umfassen oder hieraus bestehen.

10. Strukturlackbeschichtungsmasse nach einem der vorangehenden Ansprüche, ferner umfassend
mindestens einen Korrosionsschutzinhibitor ausgewählt aus der Gruppe bestehend aus Dicyclohexylammoniumnitrit, Cyclohexylammonium N-Cyclohexylcarbamat, Diisopropylammoniumnitrit, Cyclohexylamincarbonat, Guanidinnitrat, Harnstoff, Monoethanolamin, Citronensäure, Natriumbenzoat und beliebigen Mischungen hiervon, insbesondere umfassend oder bestehend aus Natriumbenzoat.

11. Strukturlackbeschichtungsmasse nach einem der vorangehenden Ansprüche,
**gekennzeichnet durch**
einen Gehalt an Wasser im Bereich von 20 bis 50 Gew.-%, insbesondere im Bereich von 30 bis 40 Gew.-%, und/oder, insbesondere und,
einen Gehalt an Bindemittel (Feststoffanteil), insbesondere basierend auf einer Styrol/Acrylat-Dispersion, im Bereich von 10 bis 40 Gew.-%, insbesondere im Bereich von 20 bis 35 Gew.-%, und/oder, insbesondere und,
einen Gehalt an Korrosionsschutzpigment, insbesondere umfassend oder bestehend aus Calciumstrontiumphosphosilicat, im Bereich von 0,5 bis 10 Gew.-%, insbesondere im Bereich von 1,5 bis 5 Gew.-%, und/oder, insbesondere und, einen Gehalt an Füllstoff, insbesondere Bariumsulfat, im Bereich von 10 bis 40 Gew.-%, insbesondere im Bereich von 15 bis 30 Gew.-%, und/oder, insbesondere und,
einen Gehalt an Polysiloxan, insbesondere Poly(dimethylsiloxane), im Bereich von 0,05 bis 1,5 Gew.-%, insbesondere im Bereich von 0,1 bis 1,0 Gew.-%, und/oder, insbesondere und,
einen Gehalt an Metallflakes, insbesondere Aluminiumflakes, im Bereich von 0,1 bis 5,0 Gew.-%, insbesondere im Bereich von 0,25 bis 3,0 Gew.-%,
jeweils bezogen auf das Gesamtgewicht der Strukturlackbeschichtungsmasse, wobei die die Strukturlackbeschichtungsmasse bildenden Komponenten sich jeweils zu 100,0 Gew.-% addieren.

12. Lackbeschichtung, erhalten durch ein- oder mehrmaliges Auftragen einer wässrigen Strukturlackbeschichtungsmasse nach einem der vorangehenden Ansprüche auf einer Oberfläche eines Substrats, bevorzugt umfassend mindestens zwei, insbesondere drei, Beschichtungsaufträge der wässrigen Strukturlackbeschichtungsmasse, wobei besonders bevorzugt vor Auftrag einer nachfolgenden Lackbeschichtung auf die vorherige Lackbeschichtung letztere zuvor einem Trocknungsvorgang unterzogen wurde.

13. Lackbeschichtung nach ein Anspruch 12, **dadurch gekennzeichnet, dass** das Substrat ein Metallsubstrat, insbesondere Eisen-, Stahl- oder Zinksubstrat, darstellt oder umfasst.

14. Beschichtetes Metallsubstrat, enthaltend eine Lackbeschichtung gemäß Anspruch 12 oder 13.

15. Metallsubstrat nach Anspruch 14, **dadurch gekennzeichnet, dass** dieses ein Zink-, Eisen-, Kupfer- oder Stahlsubstrat, insbesondere ein Stahlblechsubstrat, darstellt.

16. Metallsubstrat nach Anspruch 14 oder 15, **dadurch gekennzeichnet, dass** dieses gemäß dem TÜV Rheinland PROOF Kriterienkatalog für Beschichtungssysteme zum Korrosionsschutz für Metalle - 2 PfG S 0004, Stand 08/2016, mit 500 h Belastung unter den Bedingungen des Salzsprühnebeltests nach DIN EN ISO 9227-NSS:2019 die Klassifizierung Rostgrad Ri ≤1 aufweist.

17. Verwendung der wässrigen Strukturlackbeschichtungsmasse nach einem der Ansprüche 1 bis 11 als Eintopf-Beschichtungszusammensetzung oder für die Herstellung einer oder als Metallschutzlackbeschichtung mit Hammerschlageffekt und/oder als Korrosionsschutz oder zur Beschichtung rostiger Oberflächen.

18. Verfahren zur Beschichtung eines Metallsubstrats, insbesondere nach einem der Ansprüche 14 bis 16, mit einer wässrigen Strukturlackbeschichtungsmasse nach einem der Ansprüche 1 bis 11, **dadurch gekennzeichnet, dass**
die wässrige Strukturlackbeschichtungsmasse mittels Roll-, Streich-, oder mittels Spritzverfahren aufgetragen wird.

## Claims

1. Aqueous textured paint coating compound, in particular hammered finish coating compound, comprising
- at least one organic binder based on a vinyl ester/acrylate copolymer dispersion, in particular a versatile acid vinyl ester/acrylate dispersion, and/or a vinyl aromatic/acrylate copolymer dispersion, in particular styrene/acrylate dispersion,
- at least one corrosion protection pigment,
- at least one filler, in particular containing barium sulphate,
- at least one polysiloxane, especially polysiloxane oil, and
- metal flakes.

2. Textured paint coating compound according to claim 1, **characterized in that** the at least one corrosion protection pigment comprises strontium aluminium polyphosphate hydrate, antimony tin oxide, zinc molybdate, aluminium polyphosphate, calcium strontium phosphosilicate, basic zinc molybdenum orthophosphate hydrate and/or zinc 5-nitroisophthalate, in particular calcium strontium phosphosilicate, basic zinc molybdenum orthophosphate hydrate and/or zinc 5-nitroisophthalate.

3. Textured paint coating compound according to claim 1 or 2, **characterized in that** it is essentially nitrite-free and/or borate-free, preferably essentially nitrite-free and borate-free, and particularly preferably nitrite-free and/or borate-free,
and/or, in particular, **in that**
it has a VOC value of a maximum of 130 g/L, preferably a maximum of 100 g/L, and particularly preferably a maximum of 70 g/L, each determined according to DIN EN ISO 11890- 1 (September 2007).

4. Textured paint coating compound according to one of the preceding claims, **characterized in that**
it comprises at least one filler selected from the group consisting of layered silicates, in particular mica such as coated mica, magnesium silicates, aluminium silicates, barium sulphate and any mixtures thereof, and in particular comprises layered silicates and/or barium sulphate.

5. Textured paint coating compound according to one of the preceding claims, **characterized in that**
the at least one filler, in particular barium sulphate, has a D10 value of less than or equal to 10 µm, preferably less than or equal to 1.0 µm and particularly preferably less than 1.0 µm, and/or has a D50 value in the range of 1.0 to 30 µm, preferably in the range of greater than 1.0 to 5.0 µm, particularly preferably in the range of 2.0 to 4.5 µm, and/or has a D90 value in the range of 5.0 to 50 µm, preferably in the range of greater than 5.0 to 15 µm.

6. Textured paint coating compound according to one of the preceding claims, further comprising
dispersants, defoamers, modified layered silicates, rheology additives, in particular thickeners and/or thixotropic additives, solvents and/or pigments.

7. Textured paint coating compound according to one of the preceding claims, **characterized in that**
the metal flakes comprise or consist of aluminium flakes, preferably inorganically coated aluminium flakes and particularly preferably silicate-coated aluminium flakes.

8. Textured paint coating compound according to one of the preceding claims, **characterized in that**
the metal flakes, in particular the silicate-coated aluminium flakes,
have a D10 value in the range of 1.0 to 20 µm, preferably in the range of 2.0 to 10 µm, particularly preferably in the range of 4.0 to 9.0 µm, and/or, in particular, a D50 value in the range of 5.0 to 40 µm, preferably in the range of 10 to 30 µm, particularly preferably in the range of 14 to 22 µm, and/or, in particular, have a D90 value in the range of 15 to 60 µm, preferably in the range of 25 to 50 µm, preferably in the range of 35 to 45 µm.

9. Textured paint coating compound according to one of the preceding claims, **characterized in that**
the polysiloxanes comprise or consist of poly(dialkylsiloxanes), in particular poly(dimethylsiloxanes).

10. Textured paint coating compound according to any one of the preceding claims, further comprising
at least one corrosion inhibitor selected from the group consisting of dicyclohexylammonium nitrite, cyclohexylammonium N-cyclohexylcarbamate, diisopropylammonium nitrite, cyclohexylamine carbonate, guanidine nitrate, urea, monoethanolamine, citric acid, sodium benzoate and any mixtures thereof, in particular comprising or consisting of sodium benzoate.

11. Textured paint coating compound according to one of the preceding claims, **characterized by**
a water content in the range of 20 to 50 % by weight, in particular in the range of 30 to 40 % by weight, and/or, in particular,
a binder content (solids content), in particular based on a styrene/acrylate dispersion, in the range of 10 to 40 % by weight, in particular in the range of 20 to 35 % by weight, and/or, in particular,
a content of corrosion protection pigment, in particular comprising or consisting of calcium strontium phosphosilicate, in the range of 0.5 to 10 % by weight, in particular in the range of 1.5 to 5 % by weight, and/or, in particular,
a filler content, in particular barium sulphate, in the range of 10 to 40 % by weight, in particular in the range of 15 to 30 % by weight, and/or, in particular,
a polysiloxane content, in particular poly(dimethylsiloxane), in the range of 0.05 to 1.5 % by weight, in particular in the range of 0.1 to 1.0 % by weight, and/or, in particular,
a content of metal flakes, in particular aluminium flakes, in the range of 0.1 to 5.0 % by weight, especially in the range of 0.25 to 3.0 % by weight,
each based on the total weight of the textured paint coating compound, wherein the components forming the textured paint coating compound each add up to 100.0% by weight.

12. Paint coating obtained by applying an aqueous textured paint coating compound according to one of the preceding claims once or several times to a surface of a substrate, preferably comprising at least two, in particular three, coating applications of the aqueous textured paint coating compound, wherein particularly preferably before applying a subsequent paint coating to the previous paint coating, the latter was previously subjected to a drying process.

13. Paint coating according to claim 12, **characterized in that**
the substrate represents or comprises a metal substrate, in particular an iron, steel or zinc substrate.

14. Coated metal substrate comprising a paint coating according to claim 12 or 13.

15. Metal substrate according to claim 14, **characterized in that**
this is a zinc, iron, copper or steel substrate, in particular a steel sheet substrate.

16. Metal substrate according to claim 14 or 15, **characterized in that**
this has the classification rust grade Ri ≤1 according to the TÜV Rheinland PROOF criteria catalogue for coating systems for corrosion protection of metals - 2 PfG S 0004, version 08/2016, with 500 h exposure under the conditions of the salt spray test according to DIN EN ISO 9227-NSS:2019.

17. Use of the aqueous textured paint coating compound according to any one of claims 1 to 11 as a one-pot coating composition or for the production of a metal protective coating with hammered effect and/or as corrosion protection or for coating rusty surfaces.

18. Method for coating a metal substrate, in particular according to one of claims 14 to 16, with an aqueous textured paint coating compound according to one of claims 1 to 11, **characterized in that**
the aqueous textured paint coating compound is applied using a roller, a brush, or a spray method.

## Revendications

1. Composé aqueux de revêtement texturé de peinture, en particulier composé de revêtement à finition martelée, comprenant
- au moins un liant organique à base d'une dispersion de copolymère ester vinylique/acrylate, en particulier une dispersion acide polyvalente d'ester vinylique/acrylate, et/ou une dispersion de copolymère aromatique vinylique /acrylate, en particulier une dispersion de styrène/acrylate,
- au moins un pigment de protection contre la corrosion,
- au moins une charge, contenant en particulier du sulfate de baryum,
- au moins un polysiloxane, en particulier l'huile de polysiloxane, et
- des paillettes métalliques.

2. Composé de revêtement texturé de peinture selon la revendication 1, **caractérisé en ce que** ledit au moins un pigment de protection contre la corrosion comprend du polyphosphate d'aluminium et de strontium hydraté, de l'oxyde d'étain et d'antimoine, du molybdate de zinc, du polyphosphate d'aluminium, du phosphosilicate de calcium et de strontium, de l'orthophosphate de zinc et de molybdène basique hydraté et/ou du 5-nitroisophtalate de zinc, en particulier du phosphosilicate de calcium et de strontium, de l'orthophosphate de zinc et de molybdène basique hydraté et/ou du 5-nitroisophtalate de zinc.

3. Composé de revêtement texturé de peinture selon la revendication 1 ou 2, **caractérisé en ce que** celui-ci est essentiellement exempt de nitrites et/ou de borates, de préférence essentiellement exempt de nitrites et de borates, et plus particulièrement de préférence exempt de nitrites et/ou de borates,
et/ou en particulier, et **en ce qu'**il
présente une valeur de VOC maximale de 130 g/L, de préférence de 100 g/L maximum et plus particulièrement de 70 g/L maximum, chacune déterminée conformément à la norme DIN EN ISO 11890- 1 (septembre 2007).

4. Composé de revêtement texturé de peinture selon l'une des revendications précédentes, **caractérisée en ce que** ladite au moins une charge est choisie dans le groupe constitué par les silicates lamellaires, en particulier le mica tel que le mica enrobé, les silicates de magnésium, les silicates d'aluminium, le sulfate de baryum et tous les mélanges de ceux-ci, et en particulier comprend des silicates lamellaires et/ou du sulfate de baryum.

5. Composé de revêtement texturé de peinture selon l'une des revendications précédentes, **caractérisée en ce que** ladite au moins une charge, en particulier le sulfate de baryum, présente une valeur D10 inférieure ou égale à 10 µm, de préférence inférieure ou égale à 1,0 µm et particulièrement de préférence inférieure à 1,0 µm, et/ou présente une valeur D50 comprise entre 1,0 et 30 µm, de préférence comprise entre plus de 1,0 et 5,0 µm, particulièrement de préférence comprise entre 2,0 et 4,5 µm, et/ou présente une valeur D90 comprise entre 5,0 et 50 µm, de préférence comprise entre plus de 5,0 et 15 µm.

6. Composé de revêtement texturé de peinture selon l'une des revendications précédentes, comprenant en outre
des agents dispersants, des agents antimoussants, des silicates lamellaires modifiés, des additifs rhéologiques, en particulier des épaississants et/ou des additifs thixotropes, des solvants et/ou des pigments.

7. Composé de revêtement texturé de peinture selon l'une des revendications précédentes, **caractérisée en ce que** les paillettes métalliques comprennent ou sont constituées de paillettes d'aluminium, de préférence de paillettes d'aluminium revêtues de matière inorganique et plus particulièrement de paillettes d'aluminium revêtues de silicate.

8. Composé de revêtement texturé de peinture selon l'une des revendications précédentes, **caractérisé en ce que** les paillettes métalliques, en particulier les paillettes d'aluminium revêtues de silicate,
présentent une valeur D10 comprise entre 1,0 et 20 µm, de préférence entre 2,0 et 10 µm, particulièrement de préférence entre 4,0 et 9,0 µm, et/ou, en particulier, une valeur D50 comprise entre 5,0 et 40 µm, de préférence entre 10 et 30 µm, particulièrement de préférence entre 14 et 22 µm, et/ou, en particulier, une valeur D90 comprise entre 15 et 60 µm, de préférence entre 25 et 50 µm, de préférence entre 35 et 45 µm.

9. Composé de revêtement texturé de peinture selon l'une des revendications précédentes, **caractérisé en ce que** les polysiloxanes comprennent ou sont constitués de poly(dialkylsiloxanes), en particulier de poly(diméthylsiloxanes)

10. Composé de revêtement texturé de peinture selon l'une quelconque des revendications précédentes, comprenant en outre
au moins un inhibiteur de corrosion choisi dans le groupe constitué par le nitrite de dicyclohexylammonium, le N-cyclohexylcarbamate de cyclohexylammonium, le nitrite de diisopropylammonium, le carbonate de cyclohexylamine, le nitrate de guanidine, l'urée, la monoéthanolamine, l'acide citrique, le benzoate de sodium et tous leurs mélanges, comprenant en particulier ou constitué de benzoate de sodium.

11. Composé de revêtement texturé de peinture selon l'une des revendications précédentes, **caractérisé par**
une teneur en eau comprise entre 20 et 50 % en poids, en particulier entre 30 et 40 % en poids, et/ou, en particulier,
une teneur en liant (teneur en matières solides), en particulier à base d'une dispersion de styrène/acrylate, comprise entre 10 et 40 % en poids, en particulier entre 20 à 35 % en poids, et/ou, en particulier,
une teneur en pigment de protection contre la corrosion, en particulier en phosphosilicate de calcium et de strontium, comprise entre 0,5 et 10 % en poids, en particulier entre 1,5 et 5 % en poids, et/ou, en particulier,
une teneur en charge, en particulier en sulfate de baryum, comprise entre 10 et 40 % en poids, en particulier entre 15 et 30 % en poids, et/ou, en particulier,
une teneur en polysiloxane, en particulier poly(diméthylsiloxane), comprise entre 0,05 et 1,5 % en poids, en particulier entre 0,1 et 1,0 % en poids, et/ou, en particulier,
une teneur en paillettes métalliques, en particulier en paillettes d'aluminium, comprise entre 0,1 et 5,0 % en poids, et plus particulièrement entre 0,25 et 3,0 % en poids,
dans chaque cas, basé sur le poids total du composé de revêtement texturé de peinture, les composants formant le composé de revêtement texturé de peinture totalisant chacun 100,0 % en poids.

12. Revêtement de peinture obtenu par application d'un composé aqueux de revêtement texturé de peinture selon l'une des revendications précédentes, une ou plusieurs fois, sur la surface d'un substrat, comprenant de préférence au moins deux, et en particulier trois, applications de revêtement du composé aqueux de revêtement texturé de peinture, dans lequel, particulièrement de préférence
avant d'appliquer un revêtement de peinture ultérieur sur le revêtement de peinture précédent, ce dernier a été préalablement soumis à un processus de séchage.

13. Revêtement de peinture selon une revendication 12, **caractérisé en ce que** le substrat représente ou comprend un substrat métallique, en particulier un substrat en fer, en acier ou en zinc.

14. Substrat métallique revêtu comprenant un revêtement de peinture selon la revendication 12 ou 13.

15. Substrat métallique selon la revendication 14, **caractérisé en ce que** celui-ci représente un substrat en zinc, en fer, en cuivre ou en acier, en particulier un substrat en tôle d'acier.

16. Substrat métallique selon la revendication 14 ou 15, **caractérisé en ce qu'**il présente la classification de degré de rouille Ri ≤1 selon le catalogue de critères TÜV Rheinland PROOF pour les systèmes de revêtement pour la protection contre la corrosion des métaux - 2 PfG S 0004, version 08/2016, avec une exposition de 500 h dans les conditions du test au brouillard salin selon DIN EN ISO 9227-NSS:2019.

17. Utilisation du composé aqueux de revêtement texturé de peinture selon l'une quelconque des revendications 1 à 11 comme composition de revêtement monocomposante ou pour la fabrication d'un revêtement protecteur métallique à effet martelé et/ou comme protection contre la corrosion ou pour le revêtement de surfaces rouillées.

18. Procédé de revêtement d'un substrat métallique, en particulier selon l'une des revendications 14 à 16, avec un composé aqueux de revêtement texturé de peinture selon l'une des revendications 1 à 11, **caractérisé en ce que**
le composé aqueux de revêtement texturé de peinture est appliqué au moyen d'un rouleau, d'un pinceau ou d'un procédé d'application par pulvérisation.
